# FASCICULE DE BREVET EUROPEEN

(11) **EP 3 732 093 B1**
(45) Date de publication et mention de la délivrance du brevet: **27.04.2022**
(21) Numéro de dépôt: 18833070.8
(22) Date de dépôt: 28.12.2018
(51) Int. Cl.: B62D 65/06, B62D 65/02, B62D 35/00, B60J 1/18, B60J 1/00

(54) **BECQUET ARRIÈRE COMPRENANT UNE BUTÉE SUPÉRIEURE POUR LUNETTE**
HECKSPOILER MIT EINEM OBEREN ENDANSCHLAG FÜR EIN HECKFENSTER
REAR SPOILER COMPRISING AN UPPER END STOP FOR A REAR WINDOW

(30) Priorité: 28.12.2017 FR 1763289
(43) Date de publication de la demande: 04.11.2020
(73) Titulaire: Compagnie Plastic Omnium, 69007 Lyon (FR)
(72) Inventeur: DEPARDON, Pascal, 01800 MEXIMIEUX (FR)
(74) Mandataire: LLR
(86) Numéro de dépôt international: PCT/EP2018/097065
(87) Numéro de publication internationale: WO 2019/129836

(56) Documents cités:
- WO-A1-2015/033077
- JP-A- 2012 201 281
- JP-A- 2015 033 940
- US-A1- 2012 061 992

## Description

La présente invention concerne le domaine de l'automobile, et plus particulièrement le domaine des becquets arrières en matière plastique pour hayon de véhicule automobile.

On appelle becquet (ou spoiler en anglais ou aileron) arrière une pièce de carrosserie destinée à améliorer l'aérodynamique à l'arrière du véhicule sur laquelle cette pièce est placée. Les becquets sont également utilisés pour des aspects esthétiques du véhicule. Ils sont souvent situés et fixés en partie haute du hayon, juste au-dessus du bord supérieur de la vitre arrière. L'assemblage de la vitre sur le hayon est effectué par une opération de collage qui réalise à la fois la fixation de la vitre et la fonction d'étanchéité. Afin de préserver l'intégrité du joint de colle, déposé généralement sur la face inférieure de la vitre sous forme d'un cordon continu, il est nécessaire d'approcher et positionner la vitre et presser la colle par une trajectoire incidente quasi perpendiculaire à la piste de collage.

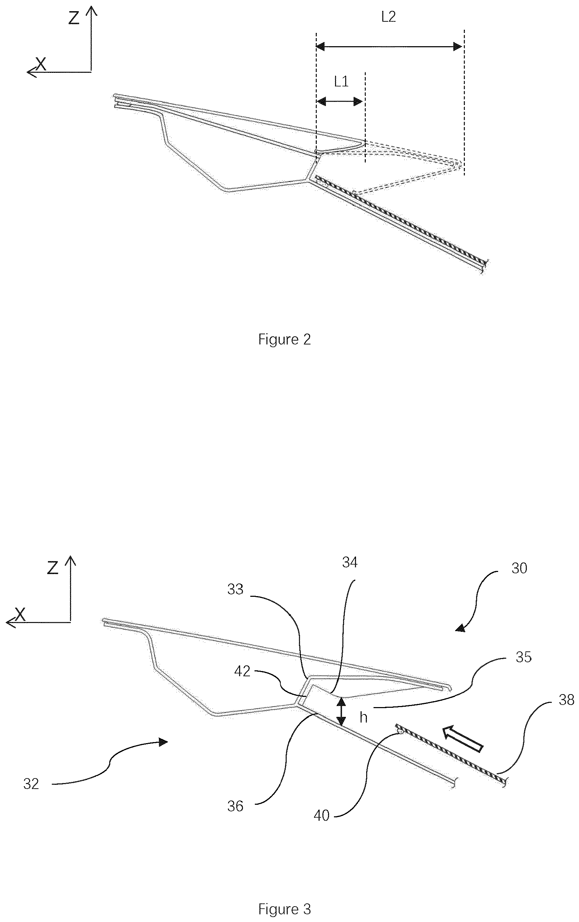

Les constructeurs automobiles préfèrent aujourd'hui des becquets de plus en plus longs pour des raisons aérodynamique et esthétique. Cependant, dans le cas où ces becquets sont positionnés sur le hayon avant l'assemblage de la vitre, ces derniers empêchent d'approcher la vitre suivant une trajectoire incidente sensiblement perpendiculaire en raison du peu d'espace de manoeuvre, typiquement de quelques centimètres, et ont tendance à gêner le champ de vision de l'opérateur. Comme nous pouvons le voir sur la figure 2 qui montre un becquet long en pointillés, ce dernier ayant une portion dépassante dont la longueur L2 est supérieure à la longueur L1 de celle d'un becquet court en traits pleins. Ainsi, on est contraint d'enlever le becquet avant de positionner la vitre. Cela est cependant indésirable car cela implique une opération de montage et démontage supplémentaire, et cela est même impossible lorsque le becquet est partiellement intégré par moulage avec le hayon ou fixé sur le hayon de façon inamovible, comme par collage.

Le document JP 2012 201281 A décrit un hayon pour véhicule automobile selon le préambule de la revendication 1.

L'invention a pour but de fournir un becquet arrière permettant de faciliter le procédé d'assemblage de la vitre sur le hayon.

À cet effet, l'invention a pour objet un hayon pour véhicule automobile selon la revendication 1.

On appelle « butée supérieure» une surface s'étendant transversalement au véhicule, le long de la partie inférieure du becquet arrière, faisant face au hayon et à la vitre lorsque le becquet arrière est positionné sur le véhicule.

On entend par « piste de collage » une piste sur laquelle vient se poser un cordon de colle.

La butée supérieure permet d'aider l'opérateur à positionner verticalement de façon précise et répétable une vitre dans le creux de la partie inférieure tout en conservant une distance suffisante entre le cordon de colle situé sous la vitre et la piste de collage située sur le hayon. Le collage de la vitre peut être réalisé suivant une trajectoire incidente sensiblement verticale sans être gêné par la longueur encombrante du becquet, ce qui simplifie le procédé d'assemblage de la vitre sur le hayon. Ainsi, elle permet de réduire le temps de mise en position de la vitre pour son collage en raison d'un champ de vision et d'un espace de manipulation sous le becquet réduits, et en diminuant de plus le risque d'abîmer le cordon de colle situé sur la face inférieure de la vitre.

Par ailleurs, la butée supérieure sert également de surface de référence pour mettre en oeuvre une cale de plaquage de la vitre et du cordon de colle contre la piste de collage.

Le becquet arrière peut en outre comporter l'une ou plusieurs des caractéristiques suivantes, prises seules ou en combinaison.
- La partie inférieure est formée par une doublure du becquet arrière. En effet, le becquet arrière comprend principalement une doublure et une peau d'aspect qui recouvre la doublure. La doublure sert de renfort au becquet et de liaison avec l'élément de carrosserie du véhicule sur lequel le becquet arrière est fixé, par exemple le hayon ou le toit du véhicule. Dans le cas où le becquet est intégré au hayon, cette doublure de becquet est monobloc et issue de moulage avec la doublure du hayon.
- Le creux de la partie inférieure comprend un épaulement dont une première face forme la butée supérieure et une seconde face faisant un angle avec la première face forme une butée de profondeur, la butée de profondeur étant configurée pour limiter l'insertion de la vitre dans sa direction d'insertion. En raison de la présence de deux butées formant un épaulement, le positionnement du bord supérieur de la vitre est limité dans les deux directions X et Z. De préférence, l'angle formé par les deux butées est compris entre 60 et 140°.
- La butée supérieure est d'un seul tenant avec la partie inférieure. Autrement dit, la butée supérieure est venue de moulage avec la partie inférieure du becquet arrière. De manière avantageuse, la butée de profondeur est également d'un seul tenant avec la partie inférieure. La réalisation de la butée supérieure ou de profondeur lors de la même opération de moulage que la partie inférieure du becquet permet d'obtenir la pièce finale en une seule étape. Une telle butée a un coût de fabrication réduit et nécessitant moins d'opérations. Alternativement, la butée supérieure et/ou la butée de profondeur est une pièce rapportée, par exemple par surmoulage ou par collage, à la partie inférieure du becquet arrière. Autrement dit, la butée supérieure ou de profondeur est fabriquée indépendamment de la partie inférieure. Cela a l'avantage la possibilité d'ajouter une butée à n'importe quel type de becquet arrière sans avoir à modifier la forme du moule de fabrication du becquet arrière.

- La partie inférieure comprend au moins deux nervures orientées vers la piste de collage formant la butée supérieure. En particulier, la butée supérieure est formée par les sommets des nervures. Ici, la butée supérieure n'est pas une surface continue. En effet, elle est définie par deux points ou deux surfaces discontinues. Alternativement, La vitre étant continue et rigide, deux points peuvent être suffisants pour positionner et guider la vitre.
- La partie inférieure comprend au moins deux nervures formant la butée de profondeur. En particulier, la butée de profondeur est formée par les sommets des nervures.
- Une même nervure forme une portion de la butée supérieure et de la butée de profondeur.

Un hayon présentant un becquet arrière, disposant d'une butée supérieure, tel que décrit précédemment permet d'aider l'assemblage d'une vitre arrière sur le hayon en facilitant l'insertion et le positionnement la vitre avant son collage.

Lorsque le becquet arrière comprend une butée de profondeur, cette dernière est également située au-dessus de la piste de collage de la vitre. Elle permet de guider l'insertion de la vitre en profondeur dans le creux de la partie inférieure du becquet arrière.

Le hayon peut en outre comporter l'une ou plusieurs des caractéristiques suivantes, prises seules ou en combinaison.
- La partie inférieure du becquet arrière est formée par une doublure du hayon. Le hayon comprend principalement une doublure et une peau d'aspect qui recouvre la doublure. La doublure sert de renfort au hayon. Ici, la doublure du becquet étant monobloc avec une doublure du hayon, le becquet arrière ne peut pas être démonté du hayon pour assembler la vitre. En raison de l'encombrement causé par la présence du becquet arrière, la butée supérieure est un moyen d'assistance performant pour le bon déroulement de l'opération de collage.
- Le creux de la partie inférieure du becquet arrière comprend un épaulement dont une première face forme la butée supérieure et une seconde face faisant un angle avec la première face forme une butée de profondeur, la butée de profondeur étant configurée pour limiter l'insertion de la vitre dans sa direction d'insertion, la butée de profondeur s'étendant jusqu'à un bord de la piste de collage. La butée de profondeur sert donc au guidage de la vitre tout le long de son déplacement vers la piste de collage

- Le hayon comprend un enjoliveur dans le creux de la partie inférieure du becquet arrière cachant la butée supérieure une fois que la vitre est collée sur le hayon. Par « enjoliveur », nous entendons une pièce d'aspect, de préférence opaque qui ferme une partie du creux de la partie inférieure du becquet arrière. Cet enjoliveur est rapporté et fixé sur le hayon après le collage de la vitre sur le cadre, de préférence par une fixation mécanique par exemple à l'aide d'un clip, d'un adhésif, d'une vis ou d'un rivet. La fixation mécanique peut être la même fixation servant à fixer un autre élément sur le becquet, par exemple un troisième feu stop. L'enjoliveur cache la butée supérieure de sorte que cette dernière ne soit pas visible depuis l'extérieur du véhicule. Lorsque le becquet arrière comprend une butée de profondeur, l'enjoliveur masque également cette butée.
- L'enjoliveur comprend un bloc en appui contre la butée supérieure et la vitre une fois qu'elle est collée. En particulier, le bloc est une cale qui a servi à exercer une pression sur la vitre au niveau du cordon de colle à la fin du procédé de collage de la vitre sur le hayon pour mieux écraser la colle sur la piste de collage.
- L'enjoliveur comprend un élément optique, de préférence un troisième feu-stop. En effet, les véhicules comportent souvent un troisième feu de stop. Pour des raisons de visibilité, il est très favorable que ce feu stop soit implanté sur un point haut du véhicule et en position centrale dans la largeur du véhicule. il est donc avantageux de placer ce feu de stop sous le becquet arrière.

L'invention a en outre pour objet un procédé d'assemblage d'une vitre et d'un hayon, la vitre comprenant un cordon de colle au niveau d'un bord supérieur et le hayon comprenant un becquet arrière comportant une partie inférieure en forme de creux ayant une butée supérieure, le hayon comportant en outre une piste de collage de la vitre, la butée supérieure étant située au-dessus de la piste de collage, le procédé comprenant les étapes suivantes :
- on insert la vitre dans le creux de la partie inférieure du becquet arrière de sorte à appuyer le bord supérieur contre la butée supérieure en maintenant un jeu entre le cordon de colle et la piste de collage tout au long de l'insertion, et
- on déplace sensiblement verticalement le bord supérieur de la vitre jusqu'à poser le cordon de colle sur la piste de collage.

En suivant ce procédé d'assemblage, on évite un contact entre le cordon de colle et la piste de collage tout au long de l'insertion, préservant le cordon de colle d'un contact avec une autre zone du hayon risquant de l'abîmer.

Avantageusement, l'étape de déplacement vertical de la vitre se fait en glissant le bord supérieur le long d'une butée de profondeur configurée pour limiter l'insertion de la vitre dans la direction d'insertion jusqu'à poser le cordon de colle sur la piste de collage.

Avantageusement, le procédé d'assemblage comporte une étape dans laquelle on presse le cordon de colle sur la piste de collage au moyen d'une cale. Exercer une pression supplémentaire sur le cordon de colle en plus du poids de la vitre permet de faire des ajustements mineurs de la position de la vitre par rapport au hayon et d'augmenter la surface de contact entre la colle et la piste de collage.

Avantageusement, le procédé comporte une étape dans laquelle on fixe la cale en appui contre la butée supérieure et la butée de profondeur. Dans ce cas, la cale assure également la fonction d'enjoliveur et possède un aspect extérieur adapté à cette fonction. Alternativement, on retire la cale une fois qu'elle a écrasé le cordon de colle sur la piste de collage.

Nous allons maintenant présenter plusieurs modes de réalisation de l'invention donnés à titre d'exemple non limitatif et à l'appui des figures annexées sur lesquelles :
- la figure 1 représente une vue de l'arrière d'un véhicule automobile,
- la figure 2 représente une coupe transversale d'un becquet arrière,
- les figures 3 à 7 représentent des coupes transversales suivant un plan XZ, illustrant différentes étapes du procédé d'assemblage d'une vitre et et d'un hayon selon un mode de réalisation de l'invention,
- les figures 8 et 9 représentent une coupe transversale d'un hayon selon deux modes de réalisation différents, et
- la figure 10 représente une vue complète de la cale des figures 6 et 7.

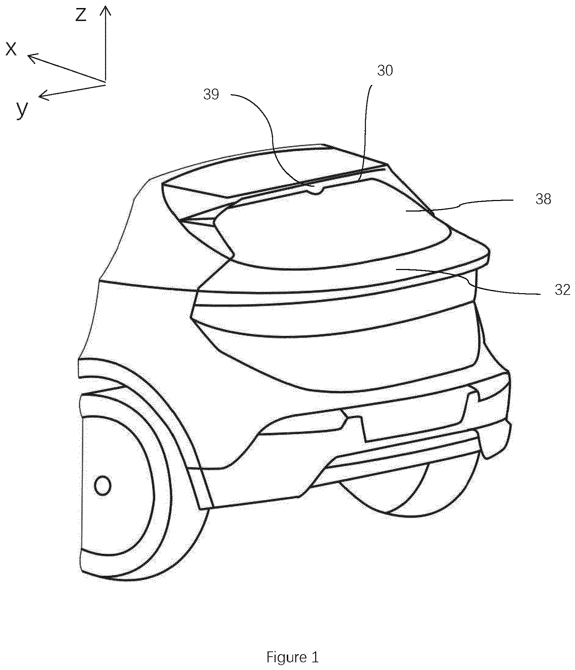

La figure 1 illustre l'arrière d'un véhicule automobile comportant un becquet arrière 30 et une vitre 38 situés sur un hayon 32. Le becquet arrière 10 comporte une portion dépassante à l'arrière du véhicule suivant l'axe X pouvant gêner l'assemblage de la vitre 38 sur le hayon 32. Un troisième feu stop 39 est monté dans le becquet arrière 30 ou dans une pièce rapportée au becquet..

La figure 2 montre un becquet arrière en pointillés ayant une portion dépassante dont la longueur L2 est supérieure à la longueur L1 de celle d'un becquet arrière en traits pleins. La longueur L2 est par exemple supérieure à 100mm, de préférence comprise entre 100mm et 300mm. La longueur L1 est par exemple inférieure à 100mm, de préférence comprise entre 40mm et 100mm. Bien que l'invention puisse être appliquée à tout type de becquet arrière, elle est particulièrement avantageuse à mettre en oeuvre dans le cas du becquet long représentés en traits pleins. En effet, il existe peu d'espace sous ce becquet arrière, typiquement quelques centimètres, de sorte qu'il est difficile de coller la vitre en l'amenant suivant une trajectoire incidente sensiblement perpendiculaire. Par ailleurs, la portion dépassante du becquet arrière peut gêner le champ de vision de l'opérateur lors de l'assemblage de la vitre sur le hayon.

La figure 3 montre un becquet arrière 30 situé sur un hayon 32. Le becquet arrière 30 comprend une partie inférieure 33 ayant une forme en creux comportant une butée supérieure 34 placée au-dessus d'une piste de collage 36 d'une vitre 38. La butée supérieure 34 est configurée pour assurer un jeu entre la piste de collage 36 et un cordon de colle 40 situé sur la vitre 38 lorsque celle-ci est en appui contre la butée supérieure 34. Dans cet exemple, la hauteur h du creux entre la piste de collage 36 et la butée supérieure 34 est comprise entre 30mm et 60mm.

Dans ce mode de réalisation, la partie inférieure 33 est une doublure du hayonrecouverte par une peau d'aspect. Dans une variante, elle est une doublure du becquet arrière 30 distincte de la doublure du hayon.

La butée supérieure 34 est d'un seul tenant avec la partie inférieure 33. Dans une variante, elle est une pièce rapportée, par exemple par surmoulage ou par collage, à la partie inférieure 33.

Le creux 35 de la partie inférieure 33 comprend un épaulement dont une première face forme la butée supérieure 34 et une seconde face faisant un angle avec la première face forme une butée de profondeur 42. Cette dernière est configurée pour limiter l'insertion de la vitre 38 dans sa direction d'insertion sous le becquet arrière 30.

Dans les modes de réalisation des figures 3 à 9, la partie inférieure 33 comprend deux nervures 44, chacune formant simultanément une portion de la butée supérieure 34 et de la butée de profondeur 42. Les nervures 44 sont placées sur le hayon 32 de sorte que les sommets soient orientés vers la piste de collage 36. De manière similaire, la butée de profondeur 42 peut également portée par deux nervures. Dans un mode de réalisation, une nervure ne porte que, soit une portion de la butée supérieure 34, soit une portion de la butée de profondeur42. La butée de profondeur 42 s'étend jusqu'à un bord de la piste de collage 36 afin de pouvoir guider un déplacement verticale de vitre 38 de la butée supérieure 34 à la piste de collage 36.

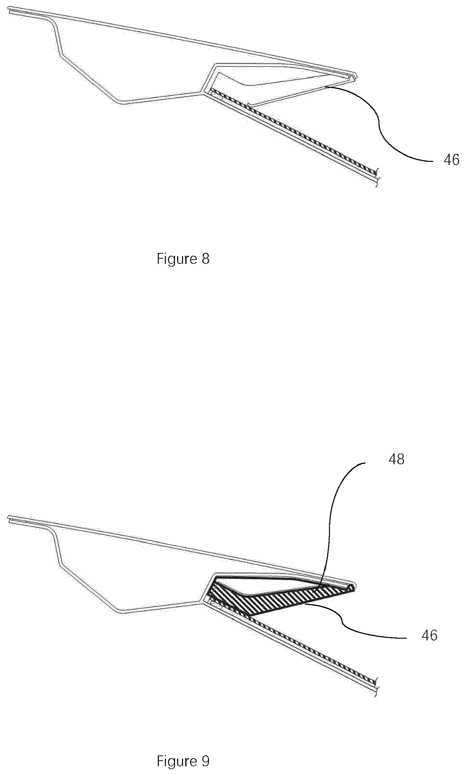

Le hayon peut comprend un enjoliveur 46 dans le creux de la partie inférieure 33, entre la peau d'aspect du becquet arrière et la vitre 38 de sorte à cacher la butée supérieure 34 une fois que la vitre est collée sur le hayon 32. Dans le mode de réalisation de la figure 8, l'enjoliveur 46 est une pièce d'aspect montée sous la portion dépassante du becquet arrière, cachant la butée supérieure 34 et éventuellement la butée de profondeur 42 si elle est présente. Dans le mode de réalisation de la figure 9, l'enjoliveur comporte un bloc 48 en appui contre la butée supérieure 34 et la vitre 38. Ce bloc 48 est de préférence une cale qui a servi pour exercer une pression sur la vitre au niveau du cordon de colle 40 contre la piste de collage 36 pour améliorer l'adhérence de la colle, le bloc 48 ayant donc un aspect extérieur qui lui permet d'assurer la fonction d'enjoliveur.

Dans une variante, l'enjoliveur 46 comporte un troisième feu stop.

On décrit maintenant le procédé d'assemblage de la vitre 38 et du hayon 32 selon un mode de réalisation de l'invention.

Comme illustré sur la figure 3, on insert la vitre 38 dans le creux de la partie inférieure 33 en dirigeant le bord supérieur de la vitre comprenant le cordon de colle 40 vers le haut afin qu'il s'appuit contre la butée supérieure 34,

On pousse ensuite la vitre 38 vers le fond du creux de la partie inférieure 33 en la maintenant aussi en appui contre la butée supérieure 34, le bord supérieur de la vitre venant en appui contre la butée de profondeur 42,

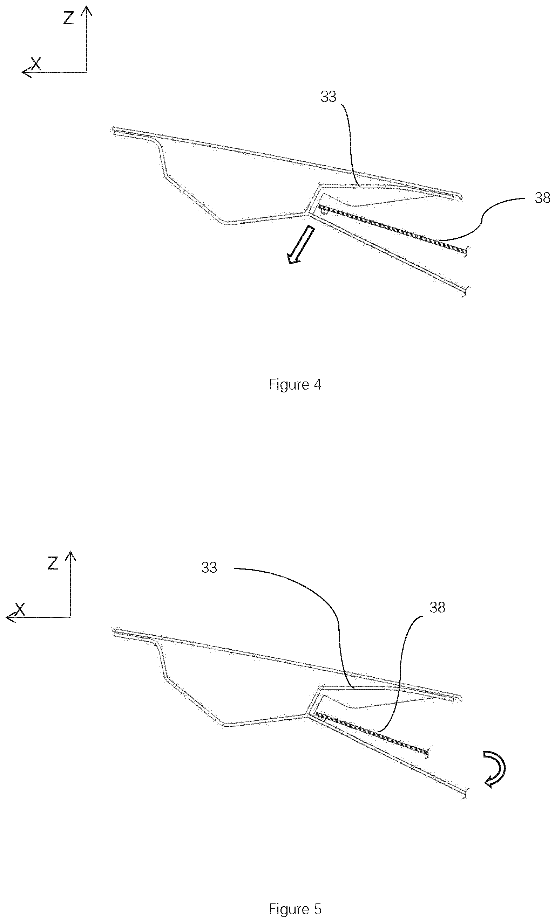

Comme illustré sur la figure 4, on déplace verticalement et vers le bas le bord supérieure de la vitre jusqu'à poser le cordon de colle 40 sur la piste de collage 36 et on rabat le reste de la vitre 38 sur le hayon 32, comme le montre la figure 5.

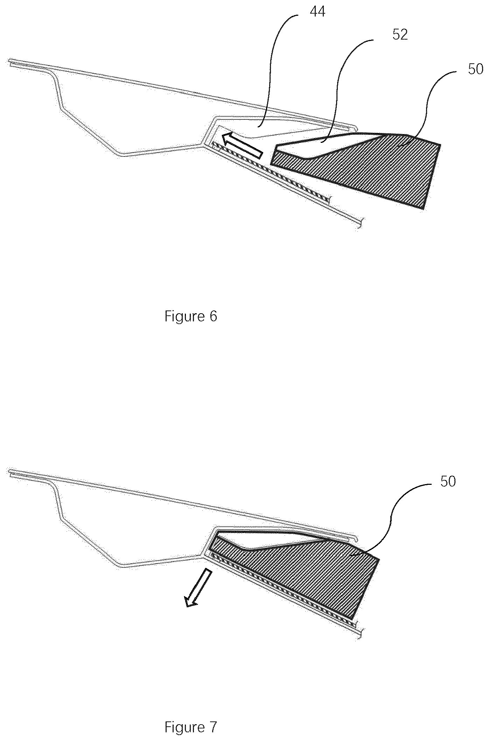

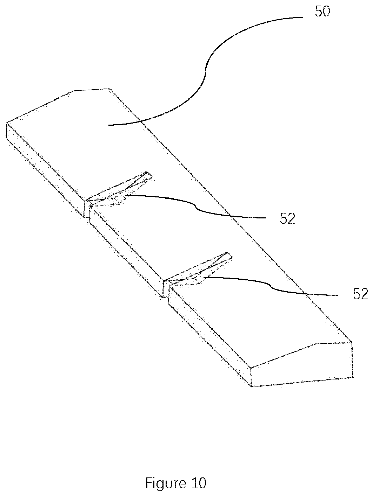

Comme illustré sur la figure 6, on insert une cale 50 dans le creux de la partie inférieure 33, en la glissant sur la face supérieure de la vitre 38. La cale 50 est visible dans son ensemble dans la figure 10. Elle comprend deux rainures 52 où s'insèrent les nervures 44 de la partie supérieure 33.

Comme illustré sur la figure 7, on pousse la cale 50 au fond du creux contre la butée supérieure 34 et la butée de profondeur 42, ce qui exerce une pression sur la vitre 38 au niveau du cordon de colle 40. Cela permet de plaquer et comprimer partiellement le cordon de colle 40 entre la vitre 38 et le hayon 32, assurant un contact continu de la colle sur la vitre 38 et le hayon 32, ce qui assure un meilleur collage ainsi que l'étanchéité de la vitre 38 sur le hayon 32.

On peut retirer la cale 50 et fixer un enjoliveur sur le becquet arrière tel que illustré sur la figure 8. Dans le mode de réalisation de la figure 9, on peut fixer directement le bloc 48 ayant servi de cale pendant le procédé d'assemblage sur le becquet arrière 30, en appui contre la butée supérieure 34 et la butée de profondeur 42, jouant ainsi le rôle d'un enjoliveur.

L'invention n'est pas limitée aux modes de réalisation présentés et d'autres modes de réalisation apparaîtront clairement à l'homme du métier dans le cadre des revendications ci-dessous :

## Revendications

1. Hayon (32) pour véhicule automobile comprenant un becquet arrière (30) et une piste de collage (36) destinée à recevoir un cordon de colle (40) situé sur une vitre (38), le becquet arrière (30) comprenant une partie inférieure (33) ayant une forme en creux (35) comportant une butée supérieure (34) située au-dessus de la piste de collage (36), la butée supérieure (34) étant configurée pour assurer un jeu entre la piste de collage (36) et un cordon de colle (40) situé sur la vitre lorsque la vitre est en appui contre la butée supérieure (34),
le hayon étant **caractérisé en ce que**
le creux de la partie inférieure du becquet arrière (30) comprend un
épaulement dont une première face forme la butée supérieure (34) et une seconde face faisant un angle avec la première face forme une butée de profondeur (42), la butée de profondeur étant configurée pour limiter l'insertion de la vitre (38) dans sa direction d'insertion, la butée de profondeur (42) s'étendant jusqu'à un bord de la piste de collage (36).

2. Hayon (32) selon la revendication précédente, dans lequel la partie inférieure (33) est formée par une doublure du becquet arrière.

3. Hayon (32) selon l'une quelconque des revendications précédentes, dans lequel la butée supérieure (34) est d'un seul tenant avec la partie inférieure (33).

4. Hayon (32) selon l'une quelconque des revendications précédentes, dans lequel la partie inférieure (33) comprend au moins deux nervures (44) orientées vers la piste de collage (36) formant la butée supérieure (34).

5. Hayon (32) selon la revendication précédente, dans lequel la partie inférieure (33) comprend au moins deux nervures formant la butée de profondeur.

6. Hayon (32) selon la revendication précédente, dans lequel une même nervure forme une portion de la butée supérieure (34) et de la butée de profondeur (42).

7. Hayon (32) selon l'une quelconque des revendications précédentes, dans lequel la partie inférieure (33) du becquet arrière (30) est formée par une doublure du hayon.

8. Hayon (42) selon la revendication 7 ou 8, comprenant un enjoliveur (46) dans le creux de la partie inférieure (33) du becquet arrière cachant la butée supérieure (34) une fois que la vitre (38) est collée sur le hayon.

9. Hayon (32) selon la revendication précédente, dans lequel l'enjoliveur (46) comprend un bloc en appui contre la butée supérieure (34) et la vitre (38) une fois qu'elle est collée.

10. Hayon (32) selon la revendication 9, dans lequel l'enjoliveur (46) comprend un élément optique, de préférence un troisième feu-stop.

11. Procédé d'assemblage d'une vitre (38) et d'un hayon (32), la vitre comprenant un cordon de colle (40) au niveau d'un bord supérieur de la vitre et le hayon (32) comprenant un becquet arrière (30) comportant une partie inférieure (33) en forme de creux ayant une butée supérieure (34), le hayon comportant en outre une piste de collage (36) de la vitre, le procédé comprenant les étapes suivantes :
- on insert la vitre (38) dans le creux de la partie inférieure (33) du becquet arrière de sorte à appuyer le bord supérieur de la vitre (38) contre la butée supérieure (34) en maintenant un jeu entre le cordon de colle (40) et la piste de collage (36) tout au long de l'insertion, et
- on déplace sensiblement verticalement le bord supérieur jusqu'à poser le cordon de colle (40) sur la piste de collage (36).

12. Procédé selon la revendication précédente, dans lequel l'étape de déplacement vertical du bord supérieur de la vitre (38) se fait en glissant le bord supérieur le long d'une butée de profondeur (42) configurée pour limitée l'insertion de la vitre (38) dans la direction d'insertion jusqu'à poser le cordon de colle (40) sur la piste de collage (36).

13. Procédé selon la revendication 12 ou 13, comportant une étape dans laquelle on appuie le cordon de colle (40) sur la piste de collage (36) au moyen d'une cale (50).

## Patentansprüche

1. Heckklappe (32) für ein Kraftfahrzeug mit einem Heckspoiler (30) und einer Klebespur (36), die dazu bestimmt ist, eine Klebstoffraupe (40) aufzunehmen, die sich auf einer Fensterscheibe (38) befindet, wobei der Heckspoiler (30) einen unteren Teil (33) mit einer Form einer Vertiefung (35) aufweist, die einen oberen Anschlag (34) aufweist, der sich oberhalb der Klebespur (36) befindet, wobei der obere Anschlag (34) so konfiguriert ist, dass er ein Spiel zwischen der Klebespur (36) und einer Klebstoffraupe (40), die sich auf der Fensterscheibe befindet, gewährleistet, wenn die Fensterscheibe gegen den oberen Anschlag (34) anliegt, wobei die Heckklappe **dadurch gekennzeichnet ist, dass** die Vertiefung des unteren Teils des Heckspoilers (30) eine Schulter aufweist, von der eine erste Seite den oberen Anschlag (34) bildet und eine zweite Seite, die einen Winkel mit der ersten Seite bildet, einen Tiefenanschlag (42) bildet, wobei der Tiefenanschlag so konfiguriert ist, dass er das Einsetzen der Fensterscheibe (38) in ihrer Einsetzrichtung begrenzt, wobei sich der Tiefenanschlag (42) bis zu einem Rand der Klebespur (36) erstreckt.

2. Heckklappe (32) nach dem vorhergehenden Anspruch, wobei der untere Teil (33) durch ein Futter des Heckspoilers gebildet wird.

3. Heckklappe (32) nach einem der vorhergehenden Ansprüche, wobei der obere Anschlag (34) einstückig mit dem unteren Teil (33) ist.

4. Heckklappe (32) nach einem der vorhergehenden Ansprüche, wobei der untere Teil (33) mindestens zwei Rippen (44) aufweist, die zur Klebespur (36) hin ausgerichtet sind, die den oberen Anschlag (34) bildet.

5. Heckklappe (32) nach dem vorhergehenden Anspruch, wobei der untere Teil (33) mindestens zwei Rippen aufweist, die den Tiefenanschlag bilden.

6. Heckklappe (32) nach dem vorhergehenden Anspruch, wobei eine einzelne Rippe einen Teil des oberen Anschlags (34) und des Tiefenanschlags (42) bildet.

7. Heckklappe (32) nach einem der vorhergehenden Ansprüche, wobei der untere Teil (33) des Heckspoilers (30) durch ein Futter der Heckklappe gebildet wird.

8. Heckklappe (32) nach Anspruch 7 oder 8, aufweisend eine Zierleiste (46) in der Vertiefung des unteren Teils (33) des Heckspoilers, die den oberen Anschlag (34) verdeckt, sobald das Fensterscheibe (38) an der Heckklappe angeklebt ist.

9. Heckklappe (32) nach dem vorhergehenden Anspruch, wobei die Zierleiste (46) einen Block aufweist, der gegen den oberen Anschlag (34) und die Fensterscheibe (38) drückt, wenn sie aufgeklebt ist.

10. Heckklappe (32) nach Anspruch 9, wobei die Zierleiste (46) ein optisches Element, vorzugsweise eine dritte Bremsleuchte, aufweist.

11. Verfahren zum Zusammenbau einer Fensterscheibe (38) und einer Heckklappe (32), wobei die Fensterscheibe eine Klebstoffraupe (40) auf Höhe eines oberen Randes der Fensterscheibe aufweist und die Heckklappe (32) einen Heckspoiler (30) aufweist, der einen unteren Teil (33) in Form einer Vertiefung mit einem oberen Anschlag (34) aufweist, wobei die Heckklappe ferner eine Klebespur (36) für die Fensterscheibe aufweist, wobei das Verfahren die folgenden Schritte aufweist:
- Einführen der Fensterscheibe (38) in die Vertiefung des unteren Teils (33) des Heckspoilers, so dass der obere Rand der Fensterscheibe (38) gegen den oberen Anschlag (34) gedrückt wird, wobei während des gesamten Einführens ein Spiel zwischen der Klebstoffraupe (40) und der Klebespur (36) aufrechterhalten wird, und
- Verschieben der oberen Kante im Wesentlichen vertikal, bis die Klebstoffraupe (40) auf der Klebespur (36) aufliegt.

12. Verfahren nach dem vorhergehenden Anspruch, wobei der Schritt des vertikalen Verschiebens der Oberkante der Fensterscheibe (38) durch Gleiten der Oberkante entlang eines Tiefenanschlags (42) erfolgt, der so konfiguriert ist, dass er das Einsetzen der Fensterscheibe (38) in der Einsetzrichtung begrenzt, bis die Klebstoffraupe (40) auf der Klebespur (36) aufliegt.

13. Verfahren nach Anspruch 12 oder 13 mit einem Schritt, bei dem die Klebstoffraupe (40) mithilfe eines Keils (50) auf die Klebespur (36) gedrückt wird.

## Claims

1. Tailgate (32) for a motor vehicle comprising a rear spoiler (30) and a bonding track (36) intended to receive a bead of adhesive (40) located on a window (38), the rear spoiler (30) comprising a lower part (33) having a hollow shape (35) having an upper stop (34) located above the bonding track (36), the upper stop (34) being configured to ensure a clearance between the bonding track (36) and a bead of adhesive (40) located on the window when the window is in support against the upper stop (34),
the tailgate being **characterized in that** the hollow of the lower part of the rear spoiler (30) comprises a shoulder of which a first face forms the upper stop (34) and a second face making an angle with the first face forms a depth stop (42), the depth stop being configured to limit the insertion of the window (38) in its direction of insertion, the depth stop (42) extending to an edge of the bonding track (36).

2. Hayon (32) according to the preceding claim, wherein the lower part (33) is formed by a lining of the rear spoiler.

3. Hayon (32) according to any one of the preceding claims, wherein the upper stop (34) is in one piece with the lower part (33).

4. Hayon (32) according to any one of the preceding claims, wherein the lower part (33) comprises at least two ribs (44) oriented towards the bonding track (36) forming the upper stop (34).

5. Hayon (32) according to the preceding claim, wherein the lower part (33) comprises at least two ribs forming the depth stop.

6. Hayon (32) according to the preceding claim, wherein the same rib forms a portion of the upper stop (34) and the depth stop (42).

7. Hayon (32) according to any of the preceding claims, in which the lower part (33) of the rear spoiler (30) is formed by a tailgate lining.

8. Tailgate (42) according to claim 7 or 8, comprising a hubcap (46) in the hollow of the lower part (33) of the rear spoiler hiding the upper stop (34) once the window (38) is glued to the tailgate.

9. Tailgate (32) according to the preceding claim, wherein the hubcap (46) comprises a block in support against the upper stop (34) and the window (38) once it is glued.

10. Tailgate (32) according to claim 9, wherein the hubcap (46) comprises an optical element, preferably a third stop lamp.

11. A method of assembling a window (38) and a tailgate (32), the window comprising a bead of adhesive (40) at an upper edge of the window and the tailgate (32) comprising a rear spoiler (30) having a lower part (33) with an upper stop (34), the tailgate further comprising a window bonding track (36), the method comprising the steps of:
- inserting the window (38) into the hollow of the lower portion (33) of the rear spoiler so as to press the upper edge of the window (38) against the upper stop (34) while maintaining a clearance between the bead of adhesive (40) and the bonding track (36) throughout the insertion, and
- the top edge is moved substantially vertically until the bead of adhesive (40) is placed on the bonding track (36).

12. A method according to the preceding claim, wherein the vertical displacement step of the upper edge of the window (38) is done by sliding the upper edge along a depth stop (42) configured to limit the insertion of the window (38) in the direction of insertion until the bead of adhesive (40) is placed on the bonding track (36).

13. A method according to claim 12 or 13, comprising a step wherein the bead of adhesive (40) is supported on the bonding track (36) by means of a wedge (50).
